(19) Europäisches Patentamt
European Patent Office
Office européen des brevets

(11) Publication number: **0 630 865 A1**

## (12) EUROPEAN PATENT APPLICATION

(21) Application number: **94109294.2**

(22) Date of filing: **16.06.94**

(51) Int. Cl.⁵: **C03B 37/012**, C03B 37/014, C03B 37/018, C03B 37/027, G02B 6/16

(30) Priority: **22.06.93 JP 150737/93**

(43) Date of publication of application:
**28.12.94 Bulletin 94/52**

(84) Designated Contracting States:
**DE FR GB IT NL SE**

(71) Applicant: **SUMITOMO ELECTRIC INDUSTRIES, LIMITED**
**5-33, Kitahama 4-chome**
**Chuo-ku**
**Osaka 541 (JP)**

(72) Inventor: **Hoshino, Sumio, c/o Yokohama Works**
**Sumitomo Electric Ind., Ltd,**
**1, Taya-cho**
**Sakae-ku,**
**Yokohama-shi,**
**Kanagawa (JP)**
Inventor: **Kanamori, Hiroo, c/o Yokohama Works**
**Sumitomo Electric Ind., Ltd,**
**1, Taya-cho**
**Sakae-ku,**
**Yokohama-shi,**
**Kanagawa (JP)**
Inventor: **Onishi, Masashi, c/o Yokohama Works**
**Sumitomo Electric Ind., Ltd,**
**1, Taya-cho**
**Sakae-ku,**
**Yokohama-shi,**
**Kanagawa (JP)**
Inventor: **Yokota, Hiroshi, c/o Yokohama Works**
**Sumitomo Electric Ind., Ltd,**
**1, Taya-cho**
**Sakae-ku,**
**Yokohama-shi,**
**Kanagawa (JP)**

(74) Representative: **Füchsle, Klaus, Dipl.-Ing. et al**
**Hoffmann, Eitle & Partner,**
**Patentanwälte,**
**Arabellastrasse 4**
**D-81925 München (DE)**

(54) **Optical fiber preform, optical fiber and their manufacturing methods.**

(57) An optical fiber preform (1) is described comprising a core (12) made of a transparent material in a central region and a cladding (11) made of a transparent material in a peripheral region. The optical fiber preform (1) is uniformly twisted in the core (12) in one direction or around a central axis passing through in the vicinity of said core (12) in one direction, and has a length longer than a twisted pitch so that an optical fiber which is drawn from the preform has uniform twists remaining in one direction, and polarization dispersion which occurs in an optical signal propagating in the optical fiber appears around an optical axis in 360° direction and is cancelled out one after another; therefore, the entire polarization dispersion can be suppressed. Further, the optical fiber may be twisted in a step of vitrifying or pulling during optical fiber manufacture, which does not cause a rise in the processing cost.

EP 0 630 865 A1

Fig. 1

## BACKGROUND OF THE INVENTION

### Field of the Invention

The present invention relates to an optical fiber preform and an optical fiber and their manufacturing methods.

### Related Background Art

Conventionally, a VAD method, an outside vapor deposition method, an inside vapor deposition method (MCVD, plasma CVD method), or a rod-in-tube method has been known as a method of manufacturing a silica optical fiber. Typical processes will be described below. In the VAD method, material is provided in an oxyhydrogen burner and fine particles of glass are synthesized in flame by hydrolysis reaction, and deposited at the end of a rotating starting rod in axial direction to make a porous glass preform, and the preform is dehydrated, vitrified, shrunk and pulled to make a cylindrical optical fiber preform. Next, the optical fiber preform is drawn to form an optical fiber which has desired refractive index distribution. The inside vapor deposition is a method of manufacturing an optical fiber by feeding material and oxygen into a silica tube, depositing glass thin films inside the tube by traversing a burner from outside of the tube and collapsing to form an optical fiber preform ('Fibers for information transmission', Seni to Kougyo Vol. 4 No. 5 1985, pp. 151-160). The rod-in-tube method is a method of manufacturing an optical fiber by inserting a glass rod which will be a core into a thick glass tube which will be a cladding, sealing its lower end, heating to soften, pulling and drawing at once.

In the aforementioned process of manufacturing an optical fiber preform, refractive index distribution is considered to be the concentric circular in all cross sections of the optical fiber obtained after fiber drawing. However, the cross sections of the optical fiber are, in fact, slightly elliptical or distorted circular; consequently, refractive index distribution is not exactly the concentric circular. Because of this, group velocities of two polarized waves perpendicular to each other in the cross section of the optical fiber have a difference, which leads a problem of polarization dispersion to be large. Therefore, when the optical fibers are utilized as optical fibers for undersea cables or trunk cables, which are required for uses of massive information and long distance transmission, the polarization dispersion effects become large. It is theoretically true that if the process of manufacturing an optical fiber is restrictively controlled, to make a core to be circular and to make a cladding and core to be concentric circular are possible. However, as the process is more restrictively controlled, difficulty is increased, which causes a rise in cost. To achieve an optical fiber which is exactly circular and concentric circular is theoretically possible; however, it is practically impossible and polarization dispersion due to structural distortion cannot be avoided since the manufacturing process cannot be ideally controlled.

In order to decrease such polarization dispersion, a method of drawing a rotating optical fiber preform has been known ("PCT/GB02/00200", and "A. J. Barlow, APPLIED OPTICS Vol. 20, No. 17, 1 September 1981, pp. 2962-2968").

## SUMMARY OF THE INVENTION

It is an object of the present invention to provide an optical fiber in which, in a case that an optical fiber and a core are not exactly circular and concentric circular, polarization dispersion due to these can be suppressed.

It is also an object of the present invention to provide an optical fiber preform suitable for manufacturing such an optical fiber and to provide their preferred manufacturing methods.

An optical fiber preform according to the present invention comprises a core made of a transparent material in a central region, and a cladding made of a transparent material in a peripheral region. The optical fiber preform is uniformly twisted around a central axis passing through in the vicinity of a center of the core in one direction, and the optical fiber preform has a length longer than a twisted pitch.

An optical fiber according to the present invention is made to be fibrous by heating, softening and drawing the above-described optical fiber preform from one end, and the optical fiber comprises remained uniform twists in one direction and has a length longer than a twisted pitch.

A method of manufacturing an optical fiber preform according to the present invention has various aspects corresponding to the conventional well-known manufacturing methods.

A method of manufacturing an optical fiber preform according to the first aspect comprises a first step of preparing a preform comprising a core made of a transparent material in a central region and a cladding made of a transparent material in a peripheral region, and a second step of applying rotating stresses in opposite direction around a central axis passing through in the center of the vicinity of the core from the both ends of the preform, rotating the preform one time or more, and heating the preform to soften.

A method of manufacturing an optical fiber preform according to the second aspect comprises a first step of preparing a preform comprising a core made of a transparent material in a central region and a layer of a porous material to be a cladding in a peripheral region, and a second step of applying rotating stresses in opposite direction around a central axis from the both ends of the core, rotating the preform one time or more, and heating the preform to vitrify the layer of the porous material and to soften the core.

A method of manufacturing an optical fiber preform according to the third aspect comprises a first step of preparing a preform comprising a layer of a porous material to be a core in a central region and a cladding made of a transparent material in a peripheral region, and a second step of applying rotating stresses in opposite direction around a central axis from the both ends of the cladding, rotating the preform one time or more, and heating the preform to soften the cladding and to vitrify the layer of the porous material.

In any of the first to third aspects, the second step may be a step of applying the rotating stresses in opposite direction and a pulling stress in the direction of the central axis, and heating the preform. Further, in the second step, the preform may be heated from one end to the other end.

In the first and second aspects, the first step may be a step of grinding the circumference of a core preform to be substantially circular, and using this grinding core preform to form an optical fiber preform.

A method of manufacturing an optical fiber according to the present invention comprises holding one end of an optical fiber preform manufactured by one of the first aspect to third aspects of the method as described above to hang down so that the other end is positioned lower, and drawing an optical fiber from the optical fiber preform by heating the other end of the optical fiber preform to soften.

Further, a method of manufacturing an optical fiber according to the present invention may comprise rotating an optical fiber preform, holding one end of an optical fiber preform manufactured by one of the first aspect to third aspects of the method as described above to hang down so that the other end is positioned lower, and drawing an optical fiber from the optical fiber preform by heating the other end of the optical fiber preform to soften.

An optical fiber according to the present invention is uniformly twisted around a central axis in one direction. Accordingly, even though the cross sections of the optical fiber and the core are not exactly circular and concentric circular, the structural distortion of the cross section appears in all directions of 360° with a certain pitch (twisted pitch); therefore, the long optical fiber entirely functions as an optical transmission line which is circular and concentric circular. The polarization dispersion occurred in an optical signal which propagates in the optical fiber having a length longer than the twisted pitch appears one after another around an optical axis in 360° direction and is cancelled out (that is, coupling of two polarization modes is made to be easier). In result, the polarization dispersion is entirely suppressed.

An optical fiber preform according to the present invention is uniformly twisted in one direction; therefore, the above-described optical fiber can be achieved by simply drawing the preform from one end.

A method of manufacturing an optical fiber preform according to the first aspect is to apply twists to a preform in which a core and a cladding are made to be a solid and which is already vitrified. Such a vitrified preform is obtained by heating and vitrifying a porous preform made by a VAD method, by heating and vitrifying a porous layer outside of a preform (cladding) made by an outside vapor phase deposition method, by heating and vitrifying a porous layer inside a preform (core) made by an inside vapor deposition method, or by heating a transparent rod material (core material) and a transparent tube material (cladding material) made by a rod-in-tube method to be a solid. Then, the preform is heated to soften while applying the rotating stress, so that twists are applied to the preform, which is needed for suppressing the polarization dispersion when the preform is drawn to be an optical fiber.

A method of manufacturing an optical fiber preform according to the second aspect performs a process of vitrifying a cladding of a preform made by an outside vapor phase deposition method, and a process of applying twists to the preform at once. A method of manufacturing an optical fiber preform according to the third aspect performs a process of vitrifying a core of a preform made by an inside vapor deposition method, and a process of twisting the preform at once. According to both the second aspect and the third aspect, the process can be made shorter.

Note that shrinking and pulling a preform can be performed at once in any of the first to third aspects if the rotating stress and the pulling stress are applied to the preform.

Further, an amount of twists which are required for improving polarization dispersion can be decreased by grinding circumference of a core preform to be substantially circular and using the grinded core preform to form an optical fiber preform.

An optical fiber of the present invention can be obtained by drawing an optical fiber preform obtained by one of the first to third aspects of the manufacturing method. That is, when the twisted preform is drawn from one end while heated to soften, the twists remain in the optical fiber. If the optical fiber preform is rotated during fiber drawing, an amount of twists in an optical fiber becomes large.

An optical fiber which has a spiral core may be formed if the preform in which a center of twists is outside the core (cladding region) is drawn. The optical fiber which has a spiral core may be a circular polarization-preserving optical fiber by controlling a spiral pitch.

The principle used in the present invention will be explained below.

Assuming a cross section of a core is elliptical, and defining non-circularity (e) of ellipse is

e = ((maximum outer diameter) - (minimum outer diameter)) / (average outer diameter),

a relation between the non-circularity (e) of ellipse and the polarization mode dispersion is shown in "K. Kashihara et al., International Wire & Cable Symposium Proceeding 1993, pp. 635-638". Improvement of polarization mode dispersion (PMD) owing to a twisted core is

$$PMD(\Phi) / PMD(\Phi = 0) = (2\pi/2\Phi)(B/\lambda) \qquad (1)$$

where

$\Phi$: number of core twisted per unit optical fiber length

B: double refractive index of optical fiber

$\lambda$: wavelength of light.

$B = 10^{-5}\text{-}10^{-7}$ for typical optical fibers.

In general, the non-circularity of core of the optical fiber preform is increased in the process of drawing a preform to form an optical fiber. The inventors measured increase of the non-circularity and polarization mode dispersion after the optical fiber was formed from the preform, and derived a required core twisted pitch to make the polarization mode dispersion = $0.1\text{ps/km}^{1/2}$ in accordance with (1). The results are shown in Table 1.

Table 1

| Preform non-circularity (%) | Fiber non-circularity (%) | Polarization mode dispersion (ps/km$^{1/2}$) | Required pitch length* (m) |
|---|---|---|---|
| 0.2-0.3 | 1.5-2 | 0.15-0.2 | 30-100 |
| 0.3-2 | 2-4 | 0.2-4 | 0.1-30 |
| 2-5 | 4-7 | 4-8 | 0.01-0.1 |

*: Required twisted pitch length to make polarization mode dispersion about $0.1\text{ps/km}^{1/2}$ in an optical fiber state

The non-circularity of the optical fiber preform is 5% or below, so that as shown in Table 1, the core twisted pitch length in an optical fiber is greater than or equal to 1cm and less than or equal to 100m corresponding to the non-circularity of the optical fiber preform. To achieve such a core twisted pitch length ($L_0$) in an optical fiber, the core twisted pitch length ($L_1$) in an optical fiber preform is obtained by

$$L_0 = (0.125/D)^2 \times L_1 \qquad (2)$$

where

D: outer diameter of optical fiber preform (unit: mm).

The non-circularity of the optical fiber preform manufactured ordinarily is 2% or below, and it is practical to make the core twisted pitch length in an optical fiber state greater than or equal to 10cm and less than or equal to 50m corresponding to the non-circularity of the optical fiber preform in view of easiness of twisting an optical fiber preform.

If a method of grinding circumference of a core preform is employed to decrease the core non-circularity of the optical fiber preform, it can be made possible to control the core non-circularity of the optical fiber preform below 0.5% by grinding its circumference. In this case, the core twisted pitch length in an optical fiber can be made greater than or equal to 1m and less than or equal to 50 m corresponding to the non-circularity of the optical fiber preform.

The inventors further experimented about the improvement of the polarization mode dispersion using a twisted optical fiber preform and drawing the preform while the preform was rotating. The results are shown in Table 2.

Table 2

| Preform twisted pitch (fiber conversion) (m) | Number of rotation (rpm) during fiber drawing (100m/min) | Real twisted pitch (fiber conversion) (cm) | Polarization mode dispersion (ps/km$^{1/2}$) |
|---|---|---|---|
| 0.5 | 0 | 50 | 0.5 |
| 1 | 100 | 50 | 0.4 |
| 10 | 190 | 50 | 0.35 |

As shown in Table 2, larger number of rotation during fiber drawing (conversion in an optical fiber state) was smaller in polarization mode dispersion regardless the real twisted pitch being the same. This results in an optical fiber to have larger non-circularity than that of the optical fiber preform after general fiber drawing, and this seems to be because temperature distribution in the direction of an optical fiber preform diameter is not uniform in a heating furnace during fiber drawing. It is considered that due to non-uniformity of temperature distribution, temperature distribution in the direction of an optical fiber preform diameter is not uniform, which makes the non-circularity to increase. Therefore, it is considered that rotating drawing is effective in improvement of polarization mode dispersion owing to a rotating effect and in addition to that, it is effective in prevention of non-circularity from increasing by decreasing non-uniformity of temperature in the direction of the optical fiber preform diameter.

Thus, according to an optical fiber of the present invention, the optical fiber is uniformly twisted around a central axis in one direction, and the structural distortion of the cross section appears in 360° direction at a certain twisted pitch, so that coupling of two polarization modes is made easier in an optical signal propagating in the optical fiber. In result, the entire polarization dispersion can be suppressed. Further, an optical fiber preform of the present invention is uniformly twisted in one direction, so that as described above, an optical fiber which can suppress the entire polarization dispersion can be achieved by simply drawing the preform from one end.

According to a method of manufacturing an optical fiber preform of the present invention, when an optical fiber preform which is obtained by a combination of a transparent material or a porous material in the central region, and a transparent material or a porous material in the peripheral region is shrunk and pulled, the rotating stresses are applied in opposite direction at both ends of the preform. Accordingly, the optical fiber preform has uniform twists in one direction at a certain pitch, and the optical fiber which is drawn from the preform has the twists remained and the previously mentioned characteristics. If an optical fiber preform in which a center of twists is outside a core is drawn, a circular polarization-preserving optical fiber may be formed by controlling a spiral pitch. In result, an optical fiber preform which is suitable for manufacturing the above-described optical fibers and their preferred manufacturing methods can be obtained.

The present invention will become more fully understood from the detailed description given hereinbelow and the accompanying drawings which are given by way of illustration only, and thus are not to be considered as limiting the present invention.

Further scope of applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

BRIEF DESCRIPTION OF THE DRAWING

Fig. 1 is a perspective view showing a part of an optical fiber preform according to the embodiment and cross sectional structure of four planes A-D.

Fig. 2-Fig. 5 are views showing an elliptical core preform in which a central axis of twists is at a center of core, and Fig. 6-Fig. 9 are views showing a distorted circular core preform in which a central axis of twists is slightly off from a center of core. Fig. 2-Fig. 5 and Fig. 6-Fig. 9 correspond to the cross sectional views of planes A-D in Fig. 1.

Fig. 10-Fig. 13 are views showing a substantially circular core preform in which a central axis of twists is at the edge of the core preform, and Fig. 14-Fig. 17 are views showing a substantially circular core preform in which a central axis of twists is off from the core preform and is in a cladding preform. Fig. 10-Fig. 13 and Fig. 14-Fig. 17 correspond to the cross sectional views of planes A-D in Fig. 1.

Fig. 18-Fig. 21 are views showing a manufacturing process using VAD (vapor-phase axial deposition method)

Fig. 22 and Fig. 23 are views showing a manufacturing process using an inside vapor deposition method.

Fig. 24 and Fig. 25 are views showing a manufacturing process using an outside vapor deposition method.

Fig. 26 and Fig. 27 are views showing a manufacturing process using a rod-in-tube method.

DETAILED DESCRIPTION OF THE PREFERRED EMBODIMENTS

An optical fiber preform, an optical fiber and their manufacturing methods are explained in order hereinbelow with reference to the accompanying drawings.

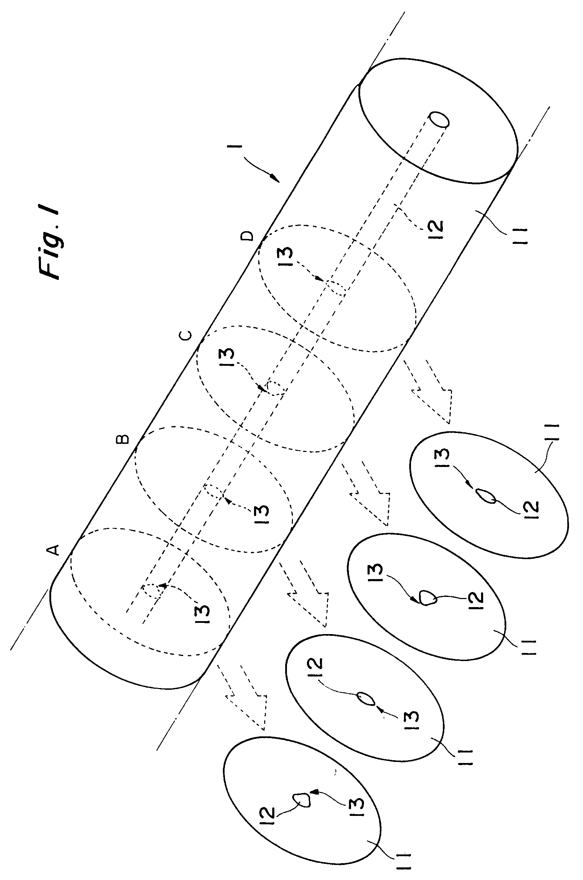

Fig. 1 is a perspective view showing a part of an optical fiber preform according to the embodiment and cross sectional structure of four planes A-D. An optical fiber preform 1 comprises a cladding preform 11 made of silica glass and a core preform 12 which has high refractive index and which is provided at a center of the cladding preform. It is assumed that the core preform 12 is located at a center of the optical fiber preform 1 but not circular and has a convex part 13.

The optical fiber preform 1 of the present embodiment is twisted uniformly in one direction and the cross sections of planes A-D are illustrated ones to which arrows are pointed in Fig. 1 when a central axis of twists is at a center of the core preform 12. As the position in an axial direction of the optical fiber preform 1 is moved to A, B, C and D, the convex part 13 of the core preform 12 is rotated around the central axis. In other words, as the optical fiber preform 1 is twisted, the core preform 12 having the concave part 13 is also twisted.

The optical fiber preform 1 shown in Fig. 1 is set in a fiber drawing furnace, and its lower end is heated and drawn to form an optical fiber. Then, the obtained optical fiber has twists remained. Accordingly, if the optical fiber is twisted one time or more, core distortion of the optical fiber corresponding to structural distortion of the core preform 12 which is the convex part 13 appears around the central axis in all direction of 360°. Therefore, polarization dispersion of propagating light due to distortion is cancelled out entirely because coupling of light in two propagation modes becomes easier. Then, the optical fiber functions as an equivalent optical fiber as a circular and concentric circular optical fiber.

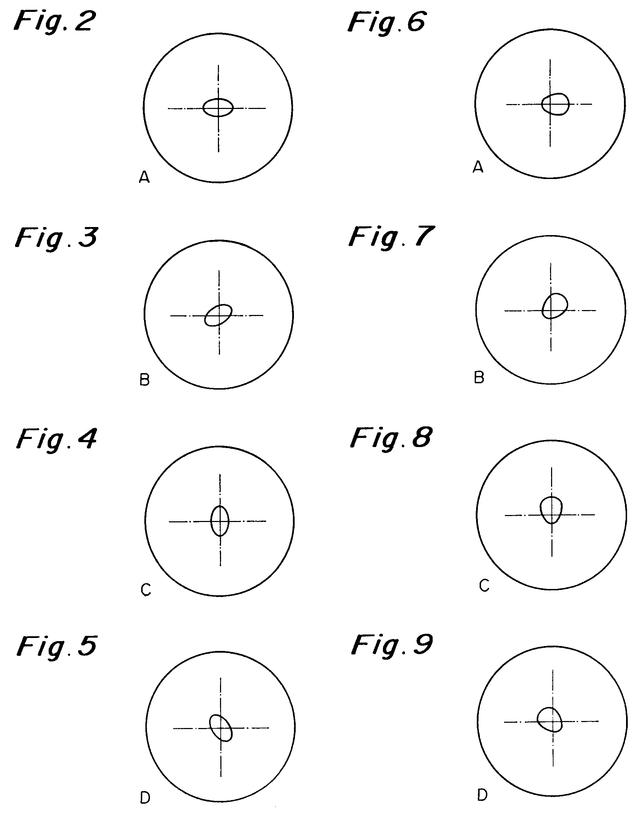

There are various aspects of structural distortion of the core preform 12 and the position of the central axis of twists, which are shown in Figs. 2-9 and Figs. 10-17. Figs. 2-5 show a case that the core preform 12 is elliptical and a center of core is a central axis of twists (intersection of dashed lines), and each drawing is a cross section of a plane A-D of Fig. 1. Figs. 6-9 also show cross sections of the planes A-D, in which the core preform 12 is distorted circular and a central axis of twists is slightly off from a center of the core preform 12.

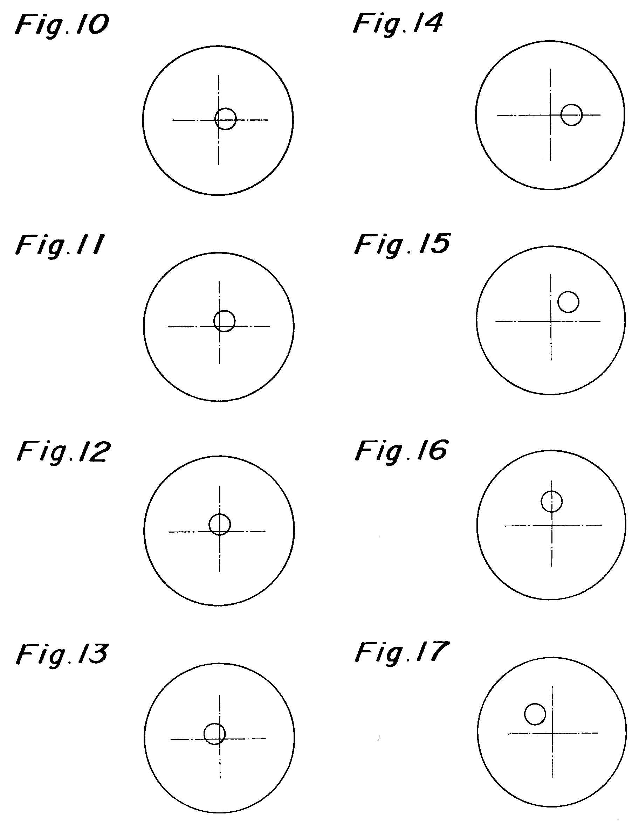

Figs. 10-17 show a case of a core preform 12 being substantially circular, and Figs. 10-13 show a case of a center of twists being at the edge of core preform 12, and Figs. 14-17 show a case of a center of twist being off from a core preform 12 but in a cladding preform 11. The polarization dispersion is a problem without twists due to the different thickness of a cladding of an optical fiber which is drawn from the preform and non-concentric circular but if the optical fiber is twisted one time or more, the polarization dispersion is cancelled out entirely.

As shown in Figs. 10-17, when the core preform 12 is eccentric, especially when it is largely eccentric as shown in Figs. 14-17, in an optical fiber which is drawn from the preform, coupling of two polarization modes becomes easier and not only the polarization dispersion is suppressed but also the following special operations are performed. That is, an optical fiber which has a spiral core may be obtained if the preform in which the center of twists is at outside of the core (cladding) is drawn. The optical fiber which has a spiral core can be a circular polarization-preserving optical fiber if the spiral pitch is adjusted. The optical fiber which has a spiral core the real length (optical transmission line length) of which is longer than the real length of the optical fiber. If rare earth elements are doped to such an optical fiber to form an optical fiber amplifier, an optical fiber amplifier which has the same characteristics as the conventional one may be obtained by using a shorter optical fiber than the conventional optical fiber amplifier.

Next, the embodiments of a method of manufacturing a preform and an optical fiber according to the present invention will be explained.

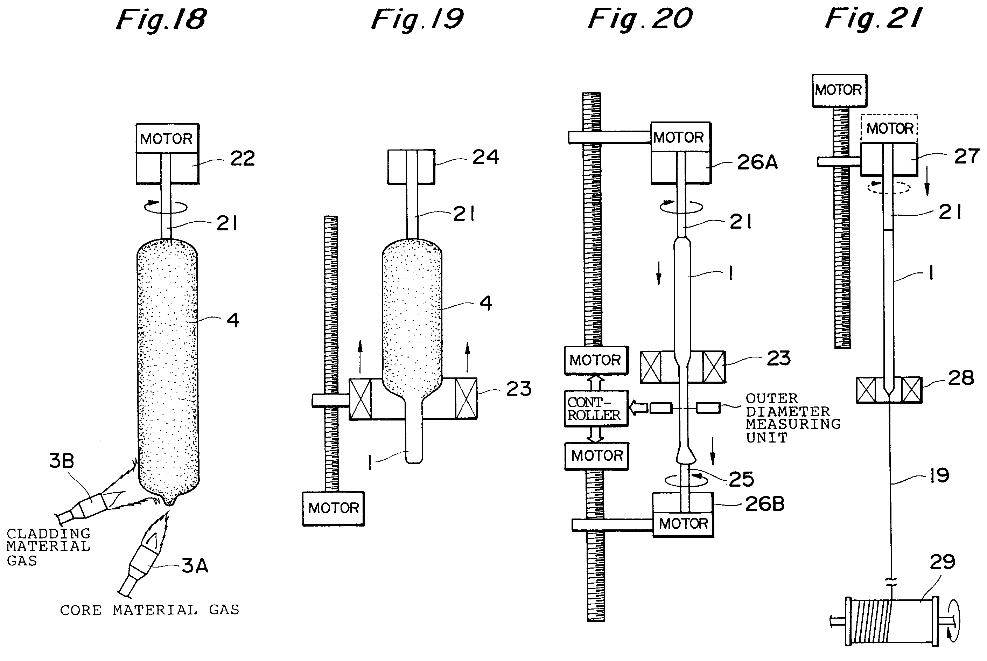

Fig. 18-Fig. 21 show a manufacturing process using a VAD (vapor-phase axial deposition) method. As shown in Fig. 18, a starting rod 21 made of silica glass is fixed in a rotating chuck 22, and a soot preform 4 is formed using burners 3A and 3B. Here, a core material which has high refractive index is provided to the burner 3A and a cladding material which has low refractive index is provided to the burner 3B. That is, when glass material gas such as $SiCl_4$, $GeCl_4$, $POCl_3$ or others is fed into oxyhydrogen flame, hydrolysis reaction is proceeded at 500-800 °C as follows:

$$SiCl_4 + 2H_2O \rightarrow SXO_2 + 4HCl$$
$$GeCl_4 + 2H_2O \rightarrow GeO_2 + 4HCl$$
$$POCl_3 + 3/2H_2O \rightarrow 1/2P_2O_5 + 3HCl$$

Fine particles of glass which are generated in flame are sprayed to the end of the staring rod 21, attached and deposited to form a porous soot preform 4. The soot preform 4 is pulled up as it grows in the axial direction. In the process of Fig. 19, the staring rod 21 is fixed with a chuck 24, and the soot preform 4 passes through a heating furnace 23 from its lower end to obtain a vitrified transparent optical fiber preform 1.

Next, as shown in Fig. 20, a dummy rod 25 is fused and connected with the optical fiber preform 1, and the staring rod 21 (or another dummy rod fused to the rod 21) is fixed in a rotating chuck 26A and the dummy rod 25 is fixed in another rotating chuck 26B. The optical fiber preform 1 passes through the heating furnace 23 from one end to the other end to soften. At this point, the rotating chucks 26A and 26B are rotated in opposite direction to twist the optical fiber preform 1 from the softened portion. The rotating chucks 26A and 26B are moved in directions separating from each other, so that the optical fiber preform 1 is pulled and shrunk.

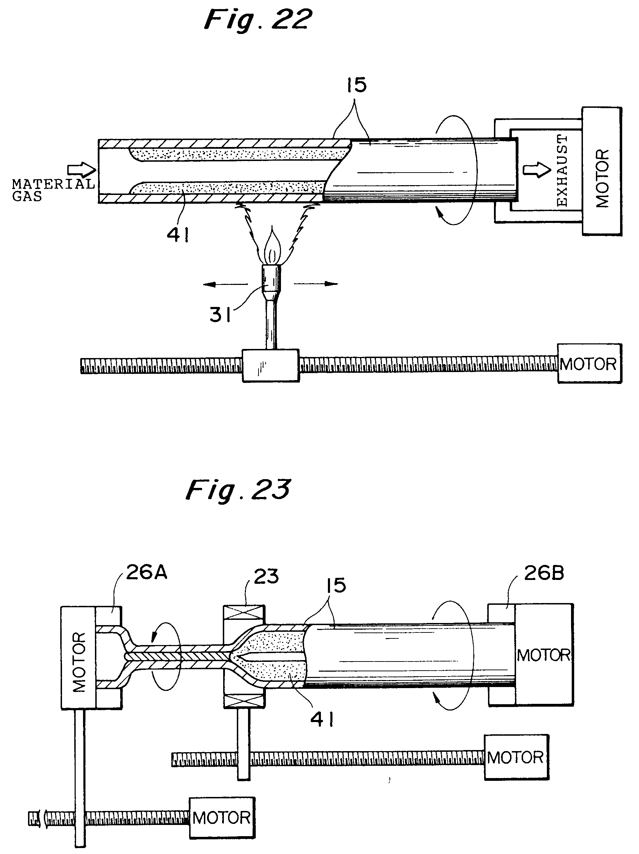

Next, as shown in Fig. 21, the dummy rod 25 is taken out from the optical fiber preform 1. The staring rod 21 is fixed in a chuck 27 and set in a drawing furnace, and its lower end is heated by a heater 28 to draw an optical fiber 19 therefrom. The optical fiber 19 to which coating is applied is wound to a drum 29. The optical fiber 19 has twists remained from the optical fiber preform 1.

The process of twisting an optical fiber preform 1 may be added to the conventional manufacturing processes but as described in the above embodiment, the preform 1 may be pulled and twisted in the process of shrinking and pulling to form a preform for fiber drawing, which is advantageous in cost.

To twist a preform, a method of rotating chucks which support a preform at both ends thereof in opposite direction may be preferred. With such a method, rotating speed can be suppressed, so that if a center of the preform is off from the center, the preform never bends by centrifugal force.

In addition, in a case of twisting a preform on a horizontal type glass lathe by the above method, the preform may be transformed. That is, rotating the chucks at both ends of the preform in opposite direction makes a rotating speed of a heated-softened portion low. Accordingly, the preform cannot be uniformly and entirely heated and hangs down by its weight. Therefore, a method of rotating both chucks in the same direction and changing their revolving speeds is preferred. This can be also applied to a vertical type to heat a preform uniformly and entirely.

Fig. 22 and Fig. 23 show a manufacturing process using an inside vapor deposition method. First, a silica tube 15 is prepared. While the silica tube 15 is heated with an oxyhydrogen burner 31 from outside and rotated, material gas is provided in the silica tube 15. Material gas is, for example, $SiCl_4$, $GeCl_4$, $POCl_3$, $BBr_3$ or $O_2$. When these glass materials are fed, the following thermal oxidation reaction generates.

$$SiCl_4 + O_2 \rightarrow SiO_2 + 2Cl_2$$
$$GeCl_4 + O_2 \rightarrow GeO_2 + 2Cl_2$$
$$POCl_4 + 3/4O_2 \rightarrow 1/2P_2O_3 + 3/2Br_2$$

In result, the generated fine particles of glass such as $SiO_2$ are attached inside the silica tube 15 to form a core porous layer 41.

Next, the silica tube 15 is fixed to rotating chucks 26A and 26B (or the silica tube 15 may be fixed after one end thereof is heated to be sealed) at both ends. The silica tube 15 is twisted while heated by passing through a heating furnace 23 (or a burner may be used). Then, collapsing (vitrifying) and twisting can be performed at once, and if the rotating chucks 26A and 26B are moved in directions separating from each other, pulling and shrinking can be performed at once.

In such a manufacturing method including a process of collapsing a glass pipe, its cross section is easily made to be elliptical in a collapsing process, and the polarization dispersion tends to be large. If the glass pipe is twisted, the polarization dispersion is further improved. Moreover, if the glass pipe is twisted and vitrified to be transparent in the collapsing process, the manufacturing cost remains the same. It is true that collapsing, twisting and pulling can be performed in different processes, disregarding the manufacturing cost.

If the glass pipe is set in a fiber drawing furnace and drawn in the way of Fig. 21, an optical fiber which has twists remained can be obtained. In a step of depositing fine particles of glass inside the silica tube 15, if a first stage is to form a porous layer by feeding a cladding material and a second stage is to deposit another porous layer by feeding a core material, either of core and cladding can be synthesized to be glass by hydrolysis in flame.

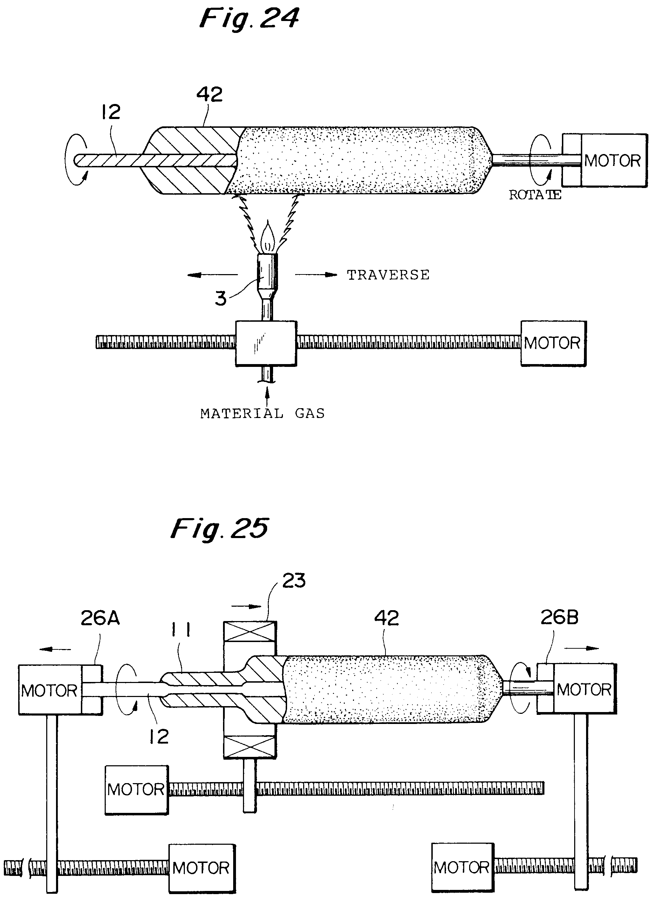

Fig. 24 and Fig. 25 show a manufacturing process using an outside vapor deposition method. First, a silica glass rod which will be a core preform 12 is prepared, and the silica glass rod is rotated and let into a flame containing fine particles of glass from a burner 3. (see Fig. 24). Then, a porous layer 42 which will be a cladding is formed outside the core preform 12.

Next, this is fixed in rotating chucks 26A and 26B, and the porous layer 42 is vitrified and twisted at once. If the preform is heated while the rotating stresses in opposite direction and pulling stress are applied, vitrifying, twisting and pulling the preform can be performed at once (see Fig. 25). The obtained optical fiber preform is set in a fiber drawing furnace in the same way as Fig. 21, and drawn from the lower end to obtain an optical fiber which has twists remained.

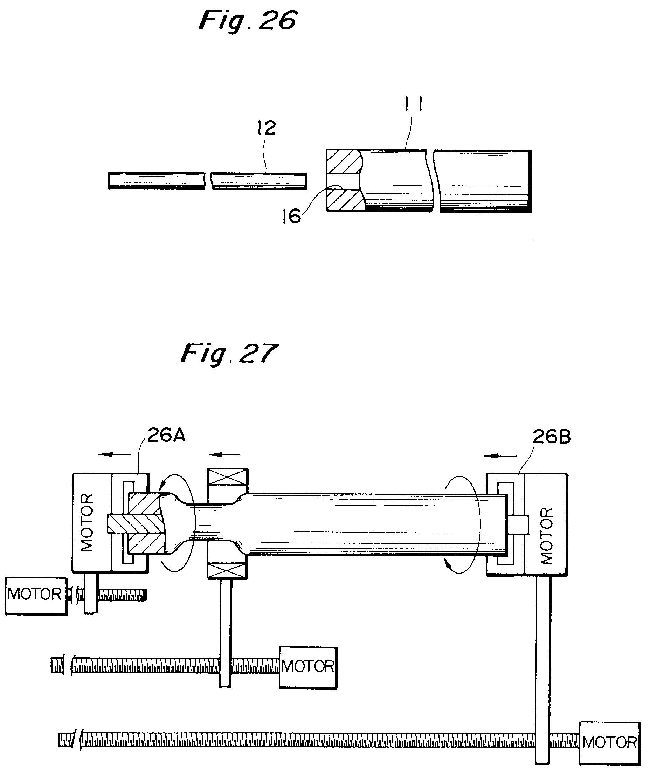

Fig. 26 and Fig. 27 show a manufacturing process using a rod-in-tube method. In this case, a pipe-shaped cladding preform 11 and a rod-shaped core preform 12 are prepared in advance, and the core preform 12 is inserted into a through hole 16 of the cladding preform 11 (see Fig. 26). At this time, if the through hole 16 is made to be eccentric, an optical fiber which has a spiral core having a spiral radius corresponding to the eccentricity can be obtained. The preform 11 can be manufactured by a VAD method or others.

Next, the cladding preform 11 and the core preform 12 are fused at one end to be a solid preform, and the solid preform is fixed in the rotating chucks 26A and 26B, and the pulling stresses in opposite direction are applied to the preform and made to be a solid preform from one end to the other end in a heating furnace 23 (see Fig. 27). If the pulling stress is further applied to the preform, making a solid preform, twisting and pulling the preform can be performed in a single process, which is the same as the above-described embodiment.

An optical fiber which has twists remained can be obtained by drawing the preform in the same way as Fig. 21. According to the method of this embodiment, it is suitable for the application to the aforementioned optical fiber amplifier since the spiral radius of a core is set in accordance with the eccentricity of the through hole 16, and the core length (real optical transmission line length) can be set at the different length from the optical fiber length.

Next, the working examples on which the present inventors worked will be explained.

Example 1

Dummy rods were fused and connected at both ends of a transparent preform (25mm in outer diameter, 400mm in length), and the preform was inserted in a vertical type heating furnace having a through hole in a vertical direction so that the lower end of the preform was at the top of the heating furnace. Note that the transparent preform was supported by fixing the dummy rods in rotatable chucks which was provided at the upper part and lower part of the heating furnace. The heating furnace was heated up to 1900 °C. The upper chuck and lower chuck were descended at a speed of 1 mm/minute and rotated at a revolving speed of 50 rpm in opposite direction, and traversed 400mm. Thereafter, the transparent preform was drawn to obtain an optical fiber. The polarization dispersion characteristic of the obtained optical fiber was excellent: 0.05 ps per 1km fiber at 1.55 $\mu$m signal light.

Example 2

A transparent preform which was equivalent to that of the example 1 was inserted into the heating furnace which was heated to 1900 °C. While the upper chuck was descended at 3 mm/minute and the lower chuck was descended at 5 mm/minute, the upper chuck was not rotated and the lower chuck was rotated at 15 rpm, and the transparent preform was twisted and pulled. The obtained preform had no defects and was excellently pulled up to the outer diameter of 19.44 mm.

Example 3

A preform in which a glass layer which would be a core was formed inside a silica pipe (30 mm in outer diameter, 10 mm in inner diameter, 300 mm in length) was installed on a horizontal type glass lathe. The preform was heated with an oxyhydrogen burner from one end to the other, and while one of chucks which fix the preform at both ends was rotated at 10 rpm and the other was rotated at 20 rpm, both chucks were traversed at a speed of 5mm/minute. The pressure of the pipe was decreased to 0.9 atmosphere, and the heating furnace was heated to 1800-1900 °C. The preform was twisted and collapsed from one end to the other. The collapsed preform was good, having no defects and no bubbles.

Example 4

Dummy rods were fused and connected at both ends of a transparent preform (40 mm in outer diameter and 100 mm in length) which would be a core and a part of cladding, and the transparent preform was installed on a horizontal glass lathe. One of chucks which were at both ends of the transparent preform was rotated at 40 rpm, and the other was rotated at 10 rpm in the same direction and traversed at 40 mm/minute. A burner was traversed at 5mm/minute in the direction opposite from the traversing direction of the other chuck. Then, the transparent preform was pulled to an outer diameter of 10 mm. Thereafter, fine particles of glass were deposited at the circumference of the preform, sintered and vitrified to form the optical fiber preform. Next, in the same way as the example 1, the optical fiber preform was inserted into a vertical heating furnace having a through hole in a vertical direction so that the lower end of the optical fiber preform was at the top of the heating furnace. Note that the optical fiber preform was supported by fixing the dummy rods in rotatable chucks which were provided at the upper part and lower part of the heating furnace. The heating furnace was heated to 1900 °C, and the upper chuck and lower chuck were descended at a speed of 10 mm/minute, rotated at 30 rpm in opposite direction from each other and traversed. Thereafter, the optical fiber preform was rotated at 30-500 rpm and drawn at 100m/minute to form an optical fiber. The obtained optical fiber had twists in the core at a pitch of 20cm-2.4m.

From the invention thus described, it will be obvious that the invention may be varied in many ways. Such variations are not to be regarded as a departure from the spirit and scope of the invention, and all such modifications as would be obvious to one skilled in the art are intended to be included within the scope of the following claims.

**Claims**

1. An optical fiber preform comprising: a core made of a transparent material in a central region, and a cladding made of a transparent material in a peripheral region; said optical fiber preform being uniformly twisted around a central axis passing through in the vicinity of a center of said core in one direction; said optical fiber preform having a length longer than a twisted pitch.

2. An optical fiber being fibrous by heating, softening and drawing an optical fiber preform according to Claim 1 from one end; said optical fiber comprising uniform twists remained in one direction and having a length longer than a twisted pitch.

3. A method of manufacturing an optical fiber preform comprising:
   a first step of preparing a preform comprising a part to be a core in a central region, and a part to be a cladding in a peripheral region;
   a second step of applying rotating stresses in opposite direction in said core or around a central axis passing through in the vicinity of said core from both ends of said preform, rotating said preform one time or more, and heating said preform to soften; and
   a third step of hardening the heated preform in said second step by cooling.

4. A method of manufacturing an optical fiber preform according to Claim 3, wherein said first step is a step of preparing a preform comprising a core preform made of a transparent material in a central region and a cladding preform made of a transparent material in a peripheral region.

5. A method of manufacturing an optical fiber preform according to Claim 4, wherein said first step is a step of preparing a core preform made of a transparent material, grinding circumference of said core preform to be substantially circular, placing the polished core preform in a central region, and placing a cladding preform made of a transparent material in a peripheral region.

6. A method of manufacturing an optical fiber preform according to Claim 4, wherein said second step is a step of applying said rotating stresses in opposite direction and a pulling stress in the direction of said central axis, and heating said preform to soften.

7. A method of manufacturing an optical fiber preform according to Claim 4, wherein said second step is a step of heating said core preform and said cladding preform from one end to the other end to soften.

8. A method of manufacturing an optical fiber preform according to Claim 3, wherein said first step is a step of preparing a preform comprising a core preform made of a transparent material in a central region and a layer of a porous material to be a cladding in a peripheral region.

9. A method of manufacturing an optical fiber preform according to Claim 8, wherein said first step is a step of preparing a core preform made of a transparent material, grinding circumference of said core preform to be substantially circular, and forming a layer of a porous material to be a cladding in a peripheral region of the polished core preform.

10. A method of manufacturing an optical fiber material according to Claim 8, wherein said second step is a step of applying said rotating stresses in opposite direction and pulling stress in the direction of said central axis, heating said layer and said core preform to vitrify said layer of the porous material and to soften said core preform.

11. A method of manufacturing an optical fiber preform according to Claim 8, wherein said second step is a step of heating said layer and said core preform from one end to the other end to vitrify said layer of the porous material and to soften said core.

12. A method of manufacturing an optical fiber preform according to Claim 3, wherein said first step is a step of preparing a preform comprising a layer of a porous material to be a core in a central region and a cladding preform made of a transparent material in a peripheral region.

13. A method of manufacturing an optical fiber preform according to Claim 12, wherein said second step is a step of applying said rotating stresses in opposite direction and pulling stress in the direction of said central axis, heating said layer and said cladding preform to vitrify said layer of the porous material and to soften said cladding preform.

14. A method of manufacturing an optical fiber preform according to Claim 12, wherein said second step is a step of heating said layer and said cladding preform from one end to the other end to vitrify said layer of the porous material and to soften said cladding preform.

15. A method of manufacturing an optical fiber comprising:
    holding one end of an optical fiber preform manufactured by a method according to Claim 3 to hang down so that the other end is positioned lower; and
    drawing an optical fiber from said optical fiber preform by heating said other end of said optical fiber preform to soften.

16. A method of manufacturing an optical fiber according to Claim 15 comprising:
    holding one end of an optical fiber preform manufactured by a method according to Claim 3 to hang down so that the other end is positioned lower;
    rotating said optical fiber preform around a central axis of said optical fiber preform; and
    drawing an optical fiber from said optical fiber preform by heating said other end of said optical fiber preform to soften.

17. A method of manufacturing an optical fiber according to Claim 15, wherein a core twisted pitch of said optical fiber manufactured after fiber drawing is greater than or equal to 1 cm and less than or equal to 100 m.

18. A method of manufacturing an optical fiber according to Claim 15, wherein a core twisted pitch of said optical fiber manufactured after fiber drawing is greater than or equal to 10 cm and less than or equal to 50 m.

19. A method of manufacturing an optical fiber according to Claim 15, wherein a core twisted pitch of said optical fiber manufactured after fiber drawing is greater than or equal to 1 m and less than or equal to 50 m.

Fig. I

**Fig.2**

A

**Fig.6**

A

**Fig.3**

B

**Fig.7**

B

**Fig.4**

C

**Fig.8**

C

**Fig.5**

D

**Fig.9**

D

Fig.10

Fig.14

Fig.11

Fig.15

Fig.12

Fig.16

Fig.13

Fig.17

Fig.18    Fig.19    Fig.20    Fig.21

MOTOR — 22

21

4

3B

CLADDING
MATERIAL
GAS

3A

CORE MATERIAL GAS

24

21

4

23

1

MOTOR

MOTOR — 26A

21

1

23

MOTOR

CONT-
ROLLER

MOTOR

OUTER
DIAMETER
MEASURING
UNIT

25

26B
MOTOR

MOTOR

MOTOR — 27

21

1

28

19

29

EP 0 630 865 A1

*Fig. 22*

*Fig. 23*

# Fig.24

# Fig.25

## Fig. 26

## Fig. 27

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| X,D<br>A | WO-A-83 00232 (CEGB)<br>* claims 1-8,10; table on page 14; page 8, line 10 - page 9, line 14; page 11, lines 11-16; page 12, line 21 - page 14, line 4 * | 2<br>15-19 | C03B37/012<br>C03B37/014<br>C03B37/018<br>C03B37/027<br>G02B6/16 |
| X<br><br><br><br>A | PATENT ABSTRACTS OF JAPAN<br>vol. 12, no. 125 (P-691) 19 April 1988<br>& JP-A-62 249 110 (SUMITOMO ELECTRIC INDUSTRIES LTD.) 30 October 1987<br>* abstract * | 2<br><br><br><br>15,16 | |
| X<br>A | EP-A-0 112 222 (THOMPON-CSF)<br>* page 7, line 17 - line 30; figures 1-3 * | 2<br>15-17 | |
| X | EP-A-0 112 223 (THOMSON-CSF)<br>* page 4, line 31 - page 6, line 18; claims 1,5,10; figures 1,4,9 * | 2 | |
| X<br>A | WO-A-83 00857 (TRW INC.)<br>* claims 1,2,12,15,17,21,22,24; figure 4; example 1 * | 2<br>15,16 | TECHNICAL FIELDS SEARCHED (Int.Cl.5) |
| X | PATENT ABSTRACTS OF JAPAN<br>vol. 6, no. 265 (P-165) 24 December 1982<br>& JP-A-57 158 806 (NTT CORP.) 30 September 1982<br>* abstract * | 2 | C03B<br>G02B |
| A | US-A-4 360 372 (R.MACIEJKO)<br>* column 1, line 60 - column 2, line 9; figure 1 * | 1,3 | |
| A | PATENT ABSTRACTS OF JAPAN<br>vol. 11, no. 103 (P-562) 2 April 1987<br>& JP-A-61 252 505 (SUMITOMO ELECTRIC INDUSTRIES LTD.) 10 November 1986<br>* abstract * | 1-3 | |

The present search report has been drawn up for all claims

| Place of search | Date of completion of the search | Examiner |
|---|---|---|
| THE HAGUE | 21 September 1994 | Stroud, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)